# EUROPÄISCHE PATENTSCHRIFT

(11) **EP 2 917 042 B1**
(45) Veröffentlichungstag und Bekanntmachung des Hinweises auf die Patenterteilung: **27.12.2017**
(21) Anmeldenummer: 13780126.2
(22) Anmeldetag: 21.10.2013
(51) Int. Cl.: B44C 1/00, B29C 43/00, B44C 3/00, B60R 13/00

(54) **KUNSTSTOFF-FORMTEIL**
PLASTICS MOULDING
PIÈCE FAÇONNÉE EN MATIÈRE PLASTIQUE

(30) Priorität: 06.11.2012 DE 102012021749
(43) Veröffentlichungstag der Anmeldung: 16.09.2015
(73) Patentinhaber: Volkswagen Aktiengesellschaft, 38440 Wolfsburg (DE)
(72) Erfinder: SAVCI, Yasin, 30823 Garbsen (DE); NOHN, Benedikt, 38302 Wolfenbüttel (DE); BECK, Wolfgang, 38114 Braunschweig (DE)
(86) Internationale Anmeldenummer: PCT/EP2013/071965
(87) Internationale Veröffentlichungsnummer: WO 2014/072165

(56) Entgegenhaltungen:
- DE-B3- 10 320 811
- GB-A- 2 268 474
- US-A- 1 611 218
- US-A- 3 439 083
- US-A1- 2005 184 488
- US-A1- 2008 211 133
- US-A1- 2009 267 329
- US-B1- 6 409 865

## Beschreibung

Die Erfindung betrifft ein Kunststoff-Formteil, insbesondere für die Innenverkleidung eines Fahrzeuges, nach dem Oberbegriff des Patentanspruches 1.

Aus dem Stand der Technik sind Farb- und/oder Oberflächenmuster mit changierenden Farbtönen bekannt. Derartige Farbmuster ändern ihre Farbe je nach Betrachtungswinkel. Solche Farbmuster werden zum Beispiel als Designmerkmal oder bei Geldscheinen als Sicherheitsmerkmal verwendet. Die Farbmuster können durch Farblacke hergestellt werden, in denen Farbpigmente mit entsprechend optischen Eigenschaften integriert sind. Insgesamt ist die Herstellung sowie das Applizieren der Lackfarben aufwendig und damit kostenintensiv.

Bislang sind die Interieurbereiche des Fahrzeuges entweder mit Ledernarbungen, Erodiernarben oder anderen technischen Narben ausgestattet. Das Betrachter-Auge kann in diesem Fall den Charakter der Struktur schnell erfassen.

Beispielhaft ist aus der DE 20 2009 014 165 U1 ein gattungsgemäßes Kunststoff-Formteil für die Innenverkleidung eines Fahrzeuges bekannt. Das Kunststoff-Formteil wird im Spritzgussverfahren hergestellt und weist eine Dekorstruktur auf, die aus regelmäßig verlaufenden Vertiefungen oder Rillen besteht, die mit einer vorgegebenen Narbtiefe in die Grundfläche des Kunststoff-Formteils eingeprägt sind. Diese Rillen sind zueinander parallel verlaufend auf einer Grundfläche des Kunststoff-Formteiles angeordnet. Zur Herstellung der Dekorstruktur weisen die ein Spritzgußwerkzeug bildenden Werkzeughälften an ihrer Formfläche die Negativform der Dekorstruktur auf.

Aus der US-A-3 439 083 ist ein gattungsgemäßes Kunststoff-Formteil bekannt, das eine Oberflächenstruktur mit einer ersten Dekorstruktur aus Vertiefungen mit einer ersten Narbtiefe und eine zweite Dekorstruktur aus Rillen mit einer zweiten Narbtiefe aufweisen. Die Rillen der ersten und zweiten Dekorstruktur verlaufen zueinander parallel.

Die Aufgabe der Erfindung besteht darin, ein Kunststoff-Formteil, etwa für die Innenverkleidung eines Fahrzeuges, bereitzustellen, bei dem changierende Muster in einfacher Weise durch die Oberflächenbearbeitung erzielt werden.

Die Aufgabe ist durch die Merkmale des Patenanspruches 1 gelöst. Bevorzugte Weiterbildungen der Erfindung sind in den abhängigen Ansprüchen offenbart.

Die Erfindung beruht auf dem Sachverhalt, dass die Herstellung changierender Farb- oder Oberflächenmuster mit Hilfe von Farblacken aufwändig sowie kostenintensiv ist und zudem bislang nicht im Hartkunststoff herstellbar war. Vor diesem Hintergrund wird erfindungsgemäß das changierende Muster nicht über derartige Lackbeschichtungen erzielt, sondern vielmehr durch eine entsprechend bearbeitete bzw. eingeprägte Oberflächenstruktur des Kunststoff-Formteiles. So ist gemäß dem kennzeichnenden Teil des Patentanspruches 1 einer ersten Dekorstruktur zumindest eine zweite Dekorstruktur überlagert. Die zweite Dekorstruktur weist - so wie auch die erste Dekorstruktur - regelmäßig verlaufende Vertiefungen auf. Die Vertiefungen der zweiten Dekorstruktur laufen jedoch, im Gegensatz zur ersten Dekorstruktur mit einer kleineren, zweiten Narbtiefe. Auf diese Weise ändert sich je nach Betrachtungswinkel der vom Betrachter-Auge (zum Beispiel aufgrund des Schattenwurfes) erkennbare Konturverlauf der Dekorstrukturen. In Abhängigkeit des Betrachterwinkels kann daher entweder nur die erste Dekorstruktur oder nur die zweite Dekorstruktur optisch im Vordergrund sein. Alternativ können bei bestimmten Betrachterwinkel auch die beiden Dekorstrukturen gleichzeitig erkennbar sein.

Besonders bevorzugt für das Kunststoff-Formteil ist ein Hartkunststoff. Die erste Narbtiefe der Vertiefungen der ersten Dekorstruktur befindet sich beispielhaft in einem Bereich von 130 bis 170 µm, insbesondere bei etwa 150 µm. Die zweite Narbtiefe der Vertiefungen der zweiten Dekorstruktur ist demgegenüber stark reduziert und befindet sich in einem Bereich von 70 bis 80 µm, insbesondere bei 70 µm. Dekorstrukturen mit derartigen Narbtiefen sind im Hinblick auf eine optische sowie haptische Erfassung für den Fahrzeuginsassen besonders vorteilhaft.

Die Vertiefungen der ersten Dekorstruktur können bei gleichbleibender erster Narbtiefe unterschiedliche Breiten und/oder unterschiedliche Abstände aufweisen. So liegen die Breiten der Vertiefungen in einem Bereich von etwa 0,3 bis 0,5 mm, während die Abstände der regelmäßig verlaufenden Vertiefungen ebenfalls in einem Bereich von 0,3 bis 0,5 mm liegen können. Gleiches trifft auch auf die Vertiefungen der zweiten Dekorstruktur zu. Die Vertiefungen der ersten und zweiten Dekorstruktur unterscheiden sich jedoch in jedem Falle durch die unterschiedlichen Narbtiefen.

Erfindungsgemäß sind die Vertiefungen der ersten und der zweiten Dekorstruktur als langgestreckte Rillen ausgebildet. Diese können von beliebiger Rillenbreite sowie Rillenform sein, etwa geradlinig oder gebogen. Zudem können die Rillenabstände je nach Muster unterschiedlich gestaltet sein. Derartige Rillen oder Vertiefungen weisen jeweils eine von einer Grundfläche des Kunststoff-Formteiles um die erste/zweite Narbtiefe zurückgesetzten Boden mit davon hochgezogenen Seitenwänden auf. Der Boden der Vertiefungen der zweiten Dekorstruktur ist daher um einen Höhenversatz oberhalb des Bodens der Vertiefungen der ersten Dekorstruktur angeordnet.

Zur Steigerung des Changier-Effektes überschneiden sich die Vertiefungen der ersten Dekorstruktur und die Vertiefungen der zweiten Dekorstruktur an Kreuzungsstellen. An einer solchen Kreuzungsstelle ist zumindest an einer der beiden Seitenwände der Rillen/Vertiefungen der ersten Dekorstruktur eine Ausnehmung vorgesehen sein, an der die Vertiefung der zweiten Dekorstruktur in die Vertiefung der ersten Dekorstruktur einmündet. Je nach Muster-Verläufen können an der Kreuzungsstelle an beiden gegenüberliegenden Seitenwänden der Vertiefung der ersten Dekorstruktur zueinander ausgerichtete Ausnehmungen vorgesehen sein.

Bevorzugt kann das Kunststoff-Formteil im Spritzgußverfahren gefertigt werden. Die Dekorstrukturen können bevorzugt gleichzeitig mit der Spritzguß-Formgebung in das Formteil eingeprägt werden. Hierzu kann in einer, eine Formkammer begrenzenden Formfläche eines Spritzgußwerkzeugs die Negativform der ersten und/oder der zweiten Dekorstruktur eingearbeitet sein.

Eine derart feine Konturierung der Formfläche des Spritzgußwerkzeugs wird insbesondere durch Laserbearbeitung ermöglicht. Mit der Lasertechnologie können Dekorstrukturen in beliebiger Ausgestaltung sowie beliebiger Anzahl im Kunststoff-Formteil einander überlagert werden.

Speziell durch den Einsatz der Lasertechnologie wird es erst möglich, die für ein Changiermuster notwendigen Details mit hoher Präzision in der Spritzgußwerkzeug-Formfläche aus Stahl, Silikon, Keramik, Aluminium oder dergleichen auszubilden. Dies gilt insbesondere bei Verwendung von Hartkunststoffmaterialien für das Formteil. Dadurch eröffnen sich neue Design-Möglichkeiten insbesondere bei der Gestaltung von Kunststoffoberflächen im Interieurbereich des Fahrzeuges. Die Erfindung ist jedoch keinesfalls auf den Fahrzeugbereich beschränkt. Vielmehr können mittels der Erfindung auch andere Produkte, etwa Laptops oder Handys, oberflächenveredelt werden.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und Weiterbildungen sowie deren Vorteile werden nachfolgend anhand von Zeichnungen näher erläutert.

Es zeigen:
- Fig. 1: in einer teilweisen Ansicht von oben ein Kunststoff-Formteil von einer Blickrichtung mit einem Betrachtungswinkel, bei dem auf dem Kunststoff-Formteil eine erste Dekorstruktur erkennbar ist;
- Fig. 2: eine Ansicht entsprechend der Fig. 1, jedoch von einer Blickrichtung mit einem Betrachtungswinkel, bei dem auf dem Kunststoff-Formteil sowohl die erste Dekorstruktur als auch die zweite Dekorstruktur erkennbar ist;
- Fig. 3: in einer stark vergrößerten perspektivischen Teilansicht das Kunststoff-Formteil; und
- Fig. 4: in einer perspektivischen Teilansicht das Spritzgusswerkzeug zur Herstellung des Kunststoff-Formteiles.

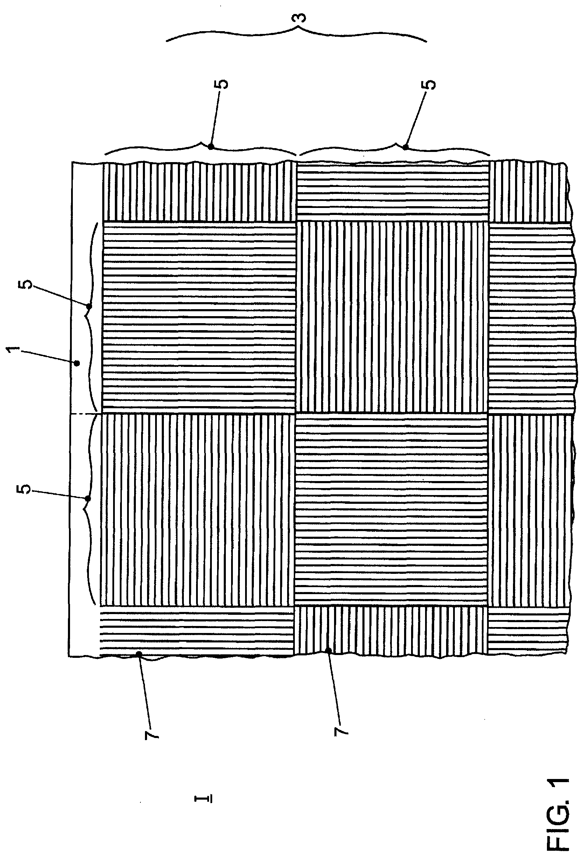

In der Fig. 1 ist ein Kunststoff-Formteil gezeigt, das Bestandteil einer Instrumententafel eines Kraftfahrzeuges sein kann. Das Kunststoff-Formteil ist aus einem Hartkunststoff-Material gefertigt, das zum Fahrzeug-Innenraum hin freigelegt ist und entsprechend als Dekorelement vom Fahrzeuginsassen einsehbar ist. Auf der, dem Fahrzeug zugewandten Grundfläche 1 des Formteiles ist ein changierendes Oberflächenmuster eingeprägt, das je nach Betrachtungswinkel seine Erscheinungsform ändert.

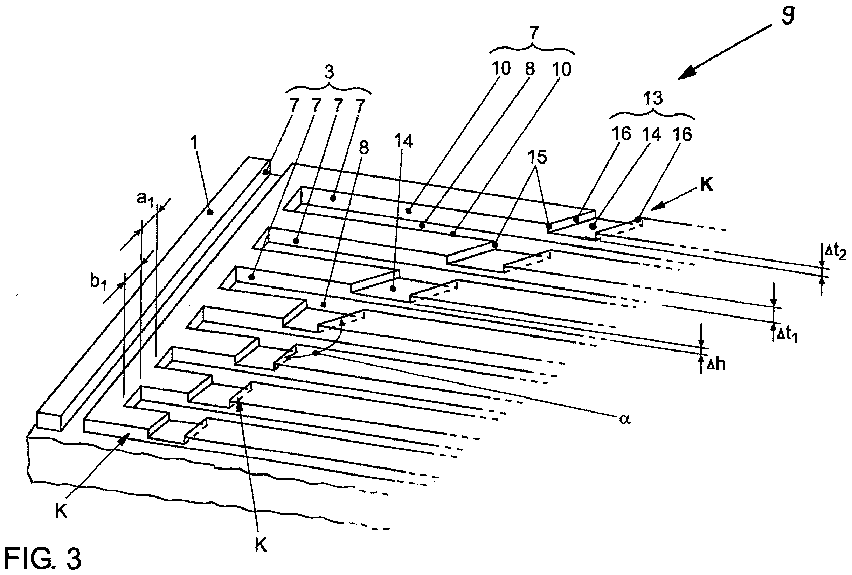

In der Fig. 1 ist das Kunststoff-Formteil von einer Blickrichtung I dargestellt, in der nur eine erste Dekorstruktur 3 erkennbar ist. Die erste Dekorstruktur 3 ist beispielhaft ein Schachbrettmuster mit quadratischen Flächenelementen 5. In jedem der Flächenelemente 5 sind als Vertiefungen abwechselnd horizontal verlaufende Rillen 7 und vertikal verlaufende Rillen 7 vorhanden. Die Geometrie der horizontal und vertikal verlaufenden Rillen 7 der ersten Dekorstruktur 3 ist zueinander identisch. Das heißt, dass die Rillen 7 in den Flächenelementen 5 jeweils regelmäßig parallel zueinander verlaufen. Die horizontalen sowie vertikalen Rillen 7 erstrecken sich gemäß der Fig. 3 mit einer gleichbleibenden Narbtiefe Δt₁ in der Grundfläche 1 des Formteiles. In der Fig. 3 ist ein stark vergrößerter Ausschnitt der mit den Dekorstrukturen 3, 9 versehenen Grundfläche 1 gezeigt. Die Geometrie der Rillen 7 der ersten Dekorstruktur 3 sowie die später beschriebenen Rillen 13 der zweiten Dekorstruktur 9 sind dabei aus Gründen der Übersichtlichkeit nicht maßstabsgerecht wiedergegeben.

Gemäß der Fig. 3 weisen die Rillen 7 der ersten Dekorstruktur 3 jeweils eine gleichbleibende Rillenbreite b₁ sowie Rillenabstände a₁ auf. Die Narbtiefe Δt₁ beträgt in der ersten Dekorstruktur 3 beispielhaft 150 µm, während die Rillenbreite b₁ bei 0,5 mm liegt und die Rillenabstände a₁ ebenfalls bei 0,5 mm liegen.

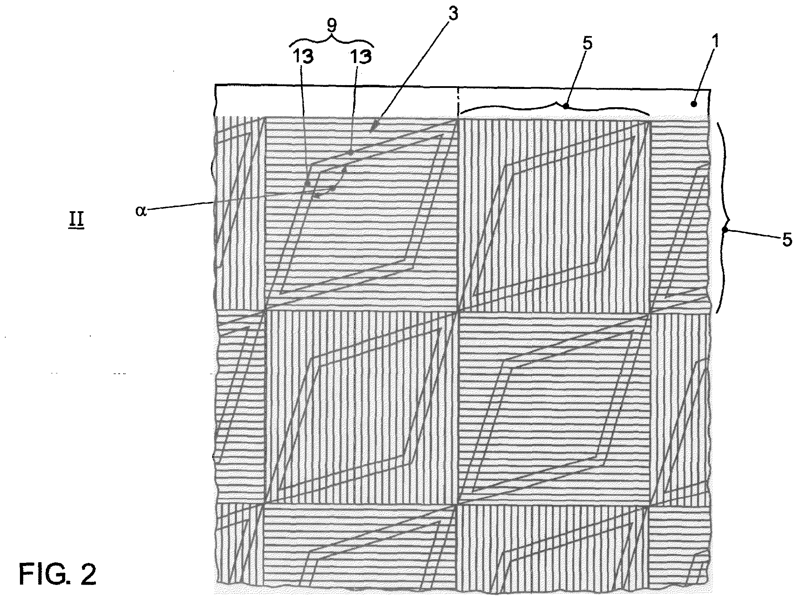

In der Fig. 2 ist das Kunststoff-Formteil von einer zweiten Blickrichtung II dargestellt, in der nicht nur die erste Dekorstruktur 3, sondern zusätzlich auch die bereits oben erwähnte zweite Dekorstruktur 9 gezeigt ist, die der ersten Dekorstruktur 3 überlagert ist. Die zweite Dekorstruktur 9 besteht gemäß der Fig. 2 aus schräggestellten Rauten auf, die mit ihren Seitenflanken 11 die in diametral gegenüberliegenden Ecken eines quadratischen Flächenelementes 5 zusammenlaufen. In der Fig. 3 sind teilweise sowie stark vergrößert die durch Rillen 13 gebildeten Seitenflanken 11 gezeigt, die stumpfwinklig mit einem sowohl in der Fig. 2 als auch der Fig. 3 gekennzeichneten Winkel α zusammen laufen.

Die Seitenflanken 11 der Rauten der zweiten Dekorstruktur 9 sind ebenfalls als Vertiefungen, das heißt als Rillen 13, in der Grundfläche 1 des Kunststoff-Formteiles eingeprägt. Jede der Rillen 7 ist dabei mit einem, um die Narbtiefe Δt₁ von der glattflächigen Grundfläche 1 zurückgesetzten Rillenboden 8 und mit davon hochgezogenen Seitenwänden 10 ausgebildet.

Die Rillen 13 der zweiten Dekorstruktur 9 sind im Gegensatz zu den Rillen 7 der ersten Dekorstruktur 3 mit einer kleineren, zweiten Narbtiefe Δt₂ eingearbeitet. Die zweite Narbtiefe Δt₂ liegt beispielhaft bei 75 µm, wie es in der Fig. 3 gezeigt ist. Gemäß der Fig. 3 bildet der Verlauf der Rillen 13 der zweiten Dekorstruktur 9 die stumpfwinklig zusammenlaufenden Seitenflanken 11 der Rauten nach. Demzufolge überlagert die in der Fig. 3 beispielhaft gezeigte Rille 13 mit der geringeren Narbtiefe Δt₂ die regelmäßig parallel verlaufenden horizontalen Rillen 7 der ersten Dekorstruktur 3. Die in der Fig. 3 gezeigte Rille 13 der zweiten Dekorstruktur 9 ist mit einem, um die Narbtiefe Δt₂ von der glattflächigen Grundfläche 1 zurückgesetzten Rillenboden 14 und mit davon hochgezogenen Seitenwänden 16 ausgebildet.

Wie aus der Fig. 3 weiter hervorgeht, überschneidet die Rille 13 der zweiten Dekorstruktur 9 an Kreuzungsstellen K jeweils die Rillen 7 der ersten Dekorstruktur 3. An jeder der Kreuzungsstellen K sind daher an den Seitenwänden 10 der Rillen 7 jeweils gegenüberliegende Ausnehmungen 15 vorgesehen. An den Ausnehmungen 15 der Seitenwände 10 mündet die Rille 13 der zweiten Dekorstruktur 9 in die jeweilige Rille 7 der ersten Dekorstruktur 3 ein. Der Rillenboden 14 der Rillen 13 der zweiten Dekorstruktur 9 ist dabei jeweils um einen Höhenversatz Δh oberhalb des Rillenbodens 8 der ersten Dekorstruktur 3 angeordnet.

Wie bereits oben erwähnt, ergibt sich durch die geringfügigen Narbtiefen Δt₁ und Δt₂ ein changierendes Muster, bei dem je nach Blickrichtung sich die Erscheinungsform ändert. In der, in der Fig. 1 gezeigten Darstellung ist die Blickrichtung I derart, dass sich kein für den Betrachter sichtbarer Schattenwurf an den Rillen 13 der zweiten Dekorstruktur 9 ergibt. Im Gegensatz dazu ist in der Blickrichtung II aus der Fig. 2 der Schattenwurf von sowohl den Rillen 7 der ersten Dekorstruktur 3 als auch den Rillen 13 der zweiten Dekorstruktur 9 zu sehen.

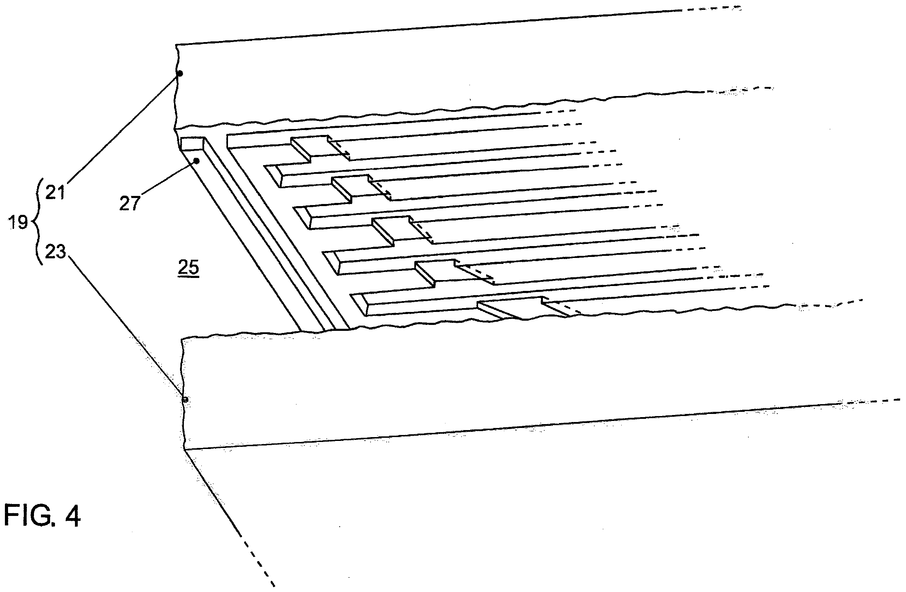

Das in den Fig. 1 bis 3 dargestellte Kunststoff-Formteil wird im Spritzgießverfahren mit Hilfe eines Spritzgusswerkzeuges 19 hergestellt, wie es in der Fig. 4 angedeutet ist. Das Spritzgusswerkzeug 19 weist eine obere und eine untere Werkzeughälfte 21, 23 auf. Die in der Fig. 4 im geöffneten Zustand gezeigten Werkzeughälften 21, 23 definieren dazwischen eine Formkammer 25, in die bei geschlossenem Spritzgusswerkzeug 19 eine Kunststoffmasse eingespritzt wird.

Wie aus der Fig. 4 hervorgeht, ist in der, die Formkammer 25 begrenzenden Formfläche 27 der oberen Werkzeughälfte 21 die Negativform der Rillen 7, 13 der ersten Dekorstruktur 3 und der zweiten Dekorstruktur 9 eingearbeitet, und zwar mit entsprechenden Narbtiefen Δt₁ und Δt₂. Die Einarbeitung der Negativform der beiden Dekorstrukturen 3, 9 erfolgt mittels Laserbearbeitung. Hierzu werden die aus Stahl gefertigten Werkzeughälften an ihren Formflächen 27 mit hoher Präzision laserbearbeitet und dadurch die dreidimensionalen Dekorstrukturen 3, 9 in Negativform auf der Formfläche 27 des Spritzgusswerkzeuges 19 hergestellt.

## Patentansprüche

1. Kunststoff-Formteil zur Oberflächenveredelung von Konsumgütern oder einer Innenverkleidung eines Fahrzeugs, das für ein changierendes Oberflächenmuster an einer Grundfläche (1) zumindest eine erste Dekorstruktur (3) mit regelmäßig, mit einer ersten Narbtiefe (Δt₁) verlaufenden Vertiefungen (7) aufweist, wobei der ersten Dekorstruktur (3) zumindest eine zweite Dekorstruktur (9) überlagert ist, die regelmäßig, mit einer kleineren zweiten Narbtiefe (Δt₂) verlaufende Vertiefungen (13) aufweist, wobei die Vertiefungen (7, 13) der ersten und zweiten Dekorstruktur (3, 9) langgestreckte und/oder gekrümmte Rillen sind, wobei die Vertiefungen (7, 13) der ersten und der zweiten Dekorstruktur (3, 9) jeweils einen von der Grundfläche (1) um die erste Narbtiefe (Δt₁) und um die zweite Narbtiefe (Δt₂) zurückgesetzten Boden (8, 14) mit davon hochgezogenen Seitenwänden (10, 16) aufweisen, und wobei der Boden (14) der Vertiefungen (13) der zweiten Dekorstruktur (9) um einen Höhenversatz (Δh) oberhalb des Bodens (8) der Vertiefungen (7) der ersten Dekorstruktur (3) angeordnet ist, **dadurch gekennzeichnet, dass** zur Steigerung des Changier-Effekts sich die Vertiefungen (7, 13) der ersten und zweiten Dekorstrukturen (3, 9) an zumindest einer Kreuzungsstelle (K) überschneiden, und dass an der Kreuzungsstelle (K) an zumindest einer der Seitenwände (10) der Vertiefung (7) der ersten Dekorstruktur (3) eine Ausnehmung (15) vorgesehen ist, an der die Vertiefung (13) der zweiten Dekorstruktur (9) in die Vertiefung (7) der ersten Dekorstruktur (3) einmündet.

2. Kunststoff-Formteil nach Anspruch 1, **dadurch gekennzeichnet, dass** die Vertiefungen (7) der ersten Dekorstruktur (3) bei gleicher erster Narbtiefe (Δt₁) unterschiedliche Breiten (b₁) und/oder Abstände (a₁) aufweisen, und/oder dass die Vertiefungen (13) der zweiten Dekorstruktur (9) bei gleichbleibender zweiter Narbtiefe (Δt₂) unterschiedliche Breiten und/oder Abstände aufweisen.

3. Kunststoff-Formteil nach einem der Ansprüche 1 oder 2, **dadurch gekennzeichnet, dass** die erste Narbtiefe (Δt₁) in einem Bereich von 130 bis 170 µm, insbesondere bei 150 µm, liegt, und/oder dass die zweite Narbtiefe (Δt₂) in einem Bereich von 70 bis 80 µm, insbesondere bei 75 µm, liegt.

## Claims

1. Plastic moulding for surface finishing of consumer goods or for internal trim of a vehicle, which has, for a changing surface pattern on a base surface (1), at least one first decorative structure (3) with regular depressions (7) with a first grain depth (Δt₁), wherein the first decorative structure (3) is overlaid with at least one second decorative structure (9) that has regular depressions (13) with a smaller second grain depth (Δt₂), wherein the depressions (7, 13) of the first and second decorative structure (3, 9) are elongate and/or curved furrows, wherein the depressions (7, 13) of the first and second decorative structure (3, 9) respectively have a bottom (8, 14) set back from the base surface (1) by the first grain depth (Δt₁) and by the second grain depth (Δt₂) with side walls (10, 16) rising up therefrom, and wherein the bottom (14) of the depressions (13) of the second decorative structure (9) is arranged with a height offset (Δh) above the bottom (8) of the depressions (7) of the first decorative structure (3), **characterized in that** in order to increase the changing effect the depressions (7, 13) of the first and second decorative structures (3, 9) overlap at at least one intersection point (K), and **in that** at the intersection point (K) at at least one of the sidewalls (10) of the depression (7) of the first decorative structure (3) there is provided a recess (15) at which the depression (13) of the second decorative structure (9) opens into the depression (7) of the first decorative structure (3).

2. Plastic moulding according to Claim 1, **characterized in that** the depressions (7) of the first decorative structure (3) have different breadths (b₁) and/or spacings (a₁), the first grain depth (Δt₁) being constant, and/or **in that** the depressions (13) of the second decorative structure (9) have different breadths and/or spacings, the second grain depth (Δt₂) remaining constant.

3. Plastic moulding according to Claim 1 or 2, **characterized in that** the first grain depth (Δt₁) is in a range between 130 and 170 µm, in particular 150 µm, and/or **in that** the second grain depth (Δt₂) is in a range between 70 and 80 µm, in particular 75 µm.

## Revendications

1. Pièce façonnée en matière plastique pour l'amélioration de surface de produits de consommation ou d'un habillage intérieur d'un véhicule, qui présente, pour un motif de surface changeant sur une surface de base (1), au moins une première structure décorative (3) avec des renfoncements (7) s'étendant régulièrement, avec une première profondeur de grain (Δt₁), au moins une deuxième structure décorative (9) étant superposée à la première structure décorative (3), laquelle présente des renfoncements (13) s'étendant régulièrement, ayant une deuxième profondeur de grain plus petite (Δt₂), les renfoncements (7, 13) de la première et de la deuxième structure décorative (3, 9) étant des rainures allongées et/ou courbes, les renfoncements (7, 13) de la première et de la deuxième structure décorative (3, 9) présentant à chaque fois un fond (8, 14) en retrait par rapport à la surface de base (1) de la première profondeur de grain (Δt₁) et de la deuxième profondeur de grain (Δt₂), avec des parois latérales rehaussées (10, 16), et le fond (14) des renfoncements (13) de la deuxième structure décorative (9) étant disposé au-dessus du fond (8) des renfoncements (7) de la première structure décorative (3) avec un décalage en hauteur (Δh), **caractérisée en ce que** pour augmenter l'effet de changement, les renfoncements (7, 13) de la première et de la deuxième structure décorative (3, 9) s'intersectent niveau au d'au moins un point d'intersection (K) et **en ce qu'**au niveau du point d'intersection (K), sur au moins l'une des parois latérales (10) du renfoncement (7) de la première structure décorative (3), est prévu un évidement (15) au niveau duquel le renfoncement (13) de la deuxième structure décorative (9) débouche dans le renfoncement (7) de la première structure décorative (3) .

2. Pièce façonnée en matière plastique selon la revendication 1, **caractérisée en ce que** les renfoncements (7) de la première structure décorative (3), pour une même première profondeur de grain (Δt₁), présentent des largeurs différentes (b₁) et/ou des espacements différents (a₁), et/ou **en ce que** les renfoncements (13) de la deuxième structure décorative (9), pour une deuxième profondeur de grain inchangée (Δt₂), présentent des largeurs et/ou des espacements différents.

3. Pièce façonnée en matière plastique selon l'une quelconque des revendications 1 ou 2, **caractérisée en ce que** la première profondeur de grain (Δt₁) est située dans une plage de 130 à 170 µm, en particulier aux environs de 150 µm, et/ou **en ce que** la deuxième profondeur de grain (Δt₂) est située dans une plage de 70 à 80 µm, en particulier aux environs de 75 µm.
